# EUROPEAN PATENT APPLICATION

(11) **EP 3 053 879 A1**
(43) Date of publication of application: **10.08.2016**
(21) Application number: 14849438.8
(22) Date of filing: 29.09.2014
(51) Int. Cl.: C01B 31/02, C08K 3/04, C08L 101/00

(54) **CARBON NANOTUBES, DISPERSION LIQUID THEREOF, CARBON NANOTUBE-CONTAINING FILM AND COMPOSITION MATERIAL**

(30) Priority: 30.09.2013 JP 2013205946; 30.09.2013 JP 2013205947; 30.09.2013 JP 2013205948
(71) Applicant: Zeon Corporation, Chiyoda-ku Tokyo 100-8246 (JP)
(72) Inventor: YOSHIWARA, Akihiko, Tokyo 100-8246 (JP)
(74) Representative: Vossius & Partner Patentanwälte Rechtsanwälte mbB
(86) International application number: PCT/JP2014/004981
(87) International publication number: WO 2015/045418

(57) **Abstract**

Carbon nanotubes that can be used in various materials and a dispersion liquid thereof are provided. The carbon nanotubes have amounts of carbon monoxide desorption and carbon dioxide desorption at from 150°C to 950°C in temperature programmed desorption that are within specific ranges.

## Description

### TECHNICAL FIELD

The present disclosure relates to carbon nanotubes and a dispersion liquid thereof, and also relates to a carbon nanotube-containing film and a composite material in which carbon nanotubes are used.

### BACKGROUND

Carbon-based materials have conventionally been widely used as constituent materials of various products. Specifically, carbon-based materials are for example widely used as constituent materials of conductive layers and catalyst layers of electrodes used in electronic components and electronic devices such as touch panels, solar cells, and fuel cells. Furthermore, conductive carbon-based materials are for example used in transport containers for semiconductor electrical components that are susceptible to static electricity, components required to have spark preventing properties such as vehicle fuel caps, and as conductivity imparting materials that are used to impart conductivity to insulating resins in the manufacture of conductive resins used as materials in electrical components and the like. One carbon-based material that has attracted attention in recent years is carbon nanotubes.

In one example, PTL 1 proposes carbon nanotubes as a carbon-based material (carbon catalyst) that can serve as a substitute for a platinum catalyst in a fuel cell. The carbon nanotubes have a total value of at least 0.06 mmol per 0.02 g for carbon monoxide desorption and carbon dioxide desorption at from 150°C to 400°C in temperature programmed desorption.

In another example, PTL 2 proposes using a high-dispersibility carbon nanosubstance as a conductivity imparting material. Dispersibility of the carbon nanosubstance in a hydrophilic solvent is raised by performing ozone surface treatment of the carbon nanosubstance to change a hydrophobic surface to a hydrophilic surface.

### CITATION LIST

### Patent Literature

PTL 1: WO2011/055739
PTL 2: JP2010-235320

### SUMMARY

### (Technical Problem)

However, the carbon nanotubes recited in PTL 1 include a metal and may suffer from reduced performance due to degradation of the metal. Improvement is therefore still required in terms of reliability.

Furthermore, the carbon nanotubes recited in PTL 2 have low dispersibility, which leaves room for further improvement.

Therefore, in recent years there has been demand for provision of carbon nanotubes that are usable in various materials and for a dispersion liquid of such carbon nanotubes. There has been particular demand in recent years for provision of carbon nanotubes having excellent reliability and dispersibility that can be used as constituent materials of electrodes and conductive resins, and also for provision of a dispersion liquid of such carbon nanotubes.

In response to such demand, the present disclosure aims to provide carbon nanotubes that can be used in various materials and a dispersion liquid of such carbon nanotubes. The present disclosure also aims to provide a carbon nanotube-containing film and a composite material containing the carbon nanotubes described above.

### (Solution to Problem)

The inventor performed diligent investigation in order to solve the problem described above. As a result, the inventor discovered that the above problem can be solved by carbon nanotubes having amounts of carbon monoxide desorption and carbon dioxide desorption at from 150°C to 950°C in temperature programmed desorption that are within specific ranges, thus leading to the present disclosure.

In other words, presently disclosed carbon nanotubes that are provided in order to advantageously solve the above problem have a carbon monoxide desorption of from 10 µmol/g to 20,000 µmol/g and a carbon dioxide desorption of from 100 µmol/g to 10,000 µmol/g at from 150°C to 950°C in temperature programmed desorption.

Among such carbon nanotubes, carbon nanotubes having any one of properties (1) to (3) described below are preferable in the present disclosure.
(1) A carbon monoxide desorption of from 10 µmol/g to 600 µmol/g and a carbon dioxide desorption of from 150 µmol/g to 350 µmol/g at from 150°C to 950°C in temperature programmed desorption.
(2) A carbon monoxide desorption of from 1,000 µmol/g to 10,000 µmol/g and a carbon dioxide desorption of from 100 µmol/g to 10,000 µmol/g at from 150°C to 950°C in temperature programmed desorption.
(3) A carbon monoxide desorption of from 1,000 µmol/g to 20,000 µmol/g and a carbon dioxide desorption of from 500 µmol/g to 10,000 µmol/g at from 150°C to 950°C in temperature programmed desorption.

In a case in which the presently disclosed carbon nanotubes have property (3) described above, the carbon nanotubes normally have a BET specific surface area by nitrogen adsorption of from 500 m²/g to 3,000 m²/g and a BET specific surface area by water vapor adsorption of from 10 m²/g to 500 m²/g.

The presently disclosed carbon nanotubes are preferably single-walled carbon nanotubes.

A presently disclosed dispersion liquid includes the carbon nanotubes described above.

Also, a presently disclosed carbon nanotube-containing film includes the carbon nanotubes described above.

Furthermore, a presently disclosed composite material includes the carbon nanotubes described above and a polymer.

### (Advantageous Effect)

The present disclosure enables acquisition of carbon nanotubes that can be used in various materials, a dispersion liquid thereof, a carbon nanotube-containing film including the carbon nanotubes, and a composite material including the carbon nanotubes.

### DETAILED DESCRIPTION

The following detailed explanation is split into individual sections for the carbon nanotubes (also referred to below as "CNTs"), the dispersion liquid thereof, the carbon nanotube-containing film, and the composite material.

### (Carbon nanotubes)

The presently disclosed CNTs have a carbon monoxide desorption of from 10 µmol/g to 20,000 µmol/g and a carbon dioxide desorption of from 100 µmol/g to 10,000 µmol/g at from 150°C to 950°C in temperature programmed desorption.

The presently disclosed CNTs preferably have any one of properties (1) to (3) described below.
(1) A carbon monoxide (CO) desorption of at least 10 µmol/g and no greater than 600 µmol/g and a carbon dioxide (CO₂) desorption of at least 150 µmol/g and no greater than 350 µmol/g at from 150°C to 950°C in temperature programmed desorption.
(2) A carbon monoxide (CO) desorption of at least 1,000 µmol/g and no greater than 10,000 µmol/g and a carbon dioxide (CO₂) desorption of at least 100 µmol/g and no greater than 10,000 µmol/g at from 150°C to 950°C in temperature programmed desorption.
(3) A carbon monoxide (CO) desorption of at least 1,000 µmol/g and no greater than 20,000 µmol/g and a carbon dioxide (CO₂) desorption of at least 500 µmol/g and no greater than 10,000 µmol/g at from 150°C to 950°C in temperature programmed desorption.

In the following description, carbon nanotubes having the above-described property (1) are referred to as "carbon nanotubes (1)", carbon nanotubes having the above-described property (2) are referred to as "carbon nanotubes (2)", and carbon nanotubes having the above-described property (3) are referred to as "carbon nanotubes (3)."

The amounts of CO and CO₂ desorption of the CNTs in temperature programmed desorption can be obtained through a commonly known method. More specifically, adsorbed water is first desorbed from the surfaces of the CNTs by heat treatment of the CNTs in a specific temperature programmed desorption device. Next, the heat treated CNTs are heated to a specific temperature in an inert gas such as helium gas, and the amounts of CO and CO₂ that are produced due to desorption of functional groups (for example, oxygen-containing compounds) from the surfaces of the CNTs are quantified.

The amount of CO desorption or the amount of CO₂ desorption at from 150°C to 950°C in temperature programmed desorption is obtained by initially heating the CNTs to 150°C and then measuring the total amount of CO or the total amount of CO₂ that is desorbed when the CNTs are further heated to 950°C.

The following explains each of the types of carbon nanotubes in detail.

### <Carbon nanotubes (1)>

The carbon nanotubes (1) have a carbon monoxide (CO) desorption of at least 10 µmol/g and no greater than 600 µmol/g and a carbon dioxide (CO₂) desorption of at least 150 µmol/g and no greater than 350 µmol/g at from 150°C to 950°C in temperature programmed desorption.

CO and CO₂ present in gas produced during temperature programmed desorption originate from various functional groups bonded to the surfaces of the CNTs such as hydroxyl group, carboxyl group, ketone group, lactone group, aldehyde group, and methyl group. The carbon nanotubes (1) have the amounts of CO and CO₂ desorption described above and are expected to have a particularly large number of hydroxyl groups and carboxyl groups on the surfaces thereof. As a result of having the property described above, the carbon nanotubes (1) for example have excellent dispersibility in various solvents. Furthermore, the carbon nanotubes (1) have excellent conductivity and are substantially composed of carbon atoms, which means that the carbon nanotubes (1) have excellent reliability and do not suffer from the degradation that is typically observed when a metal is included as a constituent component. Therefore, the carbon nanotubes (1) can be used in various materials.

From a viewpoint of improving usability of the carbon nanotubes (1), the CO desorption of the carbon nanotubes (1) is preferably at least 100 µmol/g and no greater than 590 µmol/g, and more preferably at least 300 µmol/g and no greater than 590 µmol/g. For the same reason, the CO₂ desorption of the carbon nanotubes (1) is preferably at least 200 µmol/g and no greater than 350 µmol/g.

The carbon nanotubes (1) may be single-walled carbon nanotubes or multi-walled carbon nanotubes. From a viewpoint of improving properties (for example, conductivity and mechanical properties) of a CNT-containing film or composite material obtained using the CNTs, the carbon nanotubes (1) are preferably carbon nanotubes having from one to five walls and are more preferably single-walled carbon nanotubes.

An average diameter (Av) and a diameter standard deviation (σ) of the carbon nanotubes (1) normally satisfy 0.60 > (3σ/Av) > 0.20 and preferably satisfy 0.60 > (3σ/Av) > 0.50 in order that the carbon nanotubes (1) have excellent dispersibility. Herein, the term diameter is used to refer to the outer diameter of the carbon nanotubes (1). The average diameter (Av) and the diameter standard deviation (σ) are respectively an average value and a standard deviation obtained by measuring the diameter of 100 randomly selected carbon nanotubes through observation under a transmission electron microscope (average length described further below is an average value obtained by measuring length through the same method). The carbon nanotubes (1) preferably take a normal distribution when a plot is made of diameter measured as described above on a horizontal axis and frequency on a vertical axis, and a Gaussian approximation is made.

The average diameter (Av) of the carbon nanotubes (1) is normally at least 0.5 nm and no greater than 15 nm, and preferably at least 1 nm and no greater than 10 nm.

The average length of the carbon nanotubes (1) is preferably at least 0.1 µm and no greater than 1 cm, and more preferably at least 0.1 µm and no greater than 1 mm. As a result of the average length of the carbon nanotubes (1) being in the range described above, carbon nanotube orientation can be improved and a CNT-containing film can be formed more easily.

The specific surface area (BET specific surface area) of the carbon nanotubes (1) is preferably at least 100 m²/g and more preferably at least 400 m²/g, and is preferably no greater than 2,500 m²/g and more preferably no greater than 1,600 m²/g. As a result of the specific surface area of the carbon nanotubes (1) being in the range described above, the carbon nanotubes (1) have a suitably high dispersibility. The specific surface area can be obtained through a nitrogen gas adsorption method. Specifically, the specific surface area can be obtained through a BET method by measuring a nitrogen adsorption isotherm at 77 K. Measurement of the BET specific surface area can for example be performed using a "BELSORP (registered trademark in Japan, other countries, or both)-max" (produced by Bel Japan Inc.).

The carbon nanotubes (1) preferably have micropores. In particular, the carbon nanotubes (1) preferably have micropores having a pore diameter of smaller than 2 nm. In terms of the amount of micropores present, the micropore volume as obtained through a method described below is preferably at least 0.4 mL/g, more preferably at least 0.43 mL/g, and particularly preferably at least 0.45 mL/g, and normally has an upper limit of approximately 0.65 mL/g. It is preferable that the carbon nanotubes (1) have micropores such as described above from a viewpoint of improving dispersibility of the carbon nanotubes (1). The micropore volume can for example be adjusted through appropriate alteration of a preparation method and preparation conditions of the carbon nanotubes (1).

Herein, "micropore volume (Vp)" can be calculated from equation (I)-Vp = (V/22,414) x (M/ρ)-by measuring a nitrogen adsorption isotherm of the carbon nanotubes (1) at liquid nitrogen temperature (77 K) and by setting an amount of adsorbed nitrogen at a relative pressure P/P0 = 0.19 as V. It should be noted that P is a measured pressure at adsorption equilibrium, P0 is a saturated vapor pressure of liquid nitrogen at time of measurement, and, in equation (I), M is a molecular weight of 28.010 of the adsorbate (nitrogen) and ρ is a density of 0.808 g/cm³ of the adsorbate (nitrogen) at 77 K. The micropore volume can for example be obtained using a "BELSORP (registered trademark in Japan, other countries, or both)-mini" (produced by Bel Japan Inc.).

The carbon nanotubes (1) can for example be manufactured from unspecified CNTs (also referred to below as "feedstock CNTs") that do not satisfy the above-described amounts of CO and CO₂ desorption through surface treatment of the CNTs with sulfuric acid. The amounts of CO and CO₂ desorption can be adjusted through appropriate alteration of conditions under which the CNTs are surface treated with sulfuric acid.

Although no specific limitations are placed on the sulfuric acid that is used, sulfuric acid having a purity of at least 96% is normally used. Normally at least 200 parts by mass and no greater than 10,000 parts by mass of sulfuric acid are added relative to 100 parts by mass of the feedstock CNTs. At the time of addition, the resultant mixture may be subjected to ultrasonic treatment to disperse the feedstock CNTs. Thereafter, the resultant mixture may be heated. No specific limitations are placed on the heating method other than being a normally used method which may be selected as appropriate from among methods such as heating in an oil bath or a heating mantle, and heating by microwave irradiation. Heating may be performed at standard pressure or under increased pressure in an autoclave or the like. At standard pressure, heating is normally performed for at least 0.1 hours and no greater than 50 hours at at least 30°C and no greater than 120°C, whereas at increased pressure, heating is normally performed for at least 0.1 hours and no greater than 50 hours at at least 30°C and no greater than 200°C. On the other hand, heating by microwave irradiation is normally performed for at least 0.01 hours and no greater than 24 hours by setting microwave output such that the aforementioned mixture is heated to at least 30°C and no greater than 120°C for heating at standard pressure, and at least 30°C and no greater than 200°C for heating at increased pressure. In any of the cases described above, heating may be performed in one stage or may be performed in two or more stages. The mixture is preferably stirred during heating by a commonly known stirring means.

After the feedstock CNTs have been surface treated with sulfuric acid as described above, the resultant mixture is cooled to room temperature because the mixture is extremely hot upon completion of the treatment. Next, sulfuric acid is for example removed by decantation and the treated CNTs are for example washed with water. Washing is normally performed until washing waste water is neutral.

It is expected that as a result of the CNTs being surface treated with sulfuric acid, functional groups other than the above-described functional groups, such as sulfo groups (-SO₃H), will become bonded to the surfaces of the CNTs. The presence of such sulfo groups is thought to make a significant contribution toward improving conductivity and dispersibility of the carbon nanotubes (1).

Although no specific limitations are placed on the feedstock CNTs that are used, from a viewpoint of efficiently manufacturing the carbon nanotubes (1) having the property described further above, the feedstock CNTs are preferably CNTs (also referred to be below as "SGCNTs") manufactured through a method (super growth method; refer to WO2006/011655) in which, during synthesis of carbon nanotubes through chemical vapor deposition (CVD) by supplying a feedstock compound and a carrier gas onto a substrate (also referred to below as a "substrate for CNT manufacture") having a catalyst layer for carbon nanotube manufacture (also referred to below as a "catalyst layer for CNT manufacture") on the surface thereof, catalytic activity of the catalyst layer for CNT manufacture is dramatically improved by providing a trace amount of an oxidizing agent in the system, wherein the catalyst layer is formed on the surface of the substrate through a wet process and a gas having acetylene as a main component (for example, a gas including at least 50% by volume of acetylene) is used as a feedstock gas.

### <Carbon nanotubes (2)>

The carbon nanotubes (2) have a carbon monoxide (CO) desorption of at least 1,000 µmol/g and no greater than 10,000 µmol/g and a carbon dioxide (CO₂) desorption of at least 100 µmol/g and no greater than 10,000 µmol/g at from 150°C to 950°C in temperature programmed desorption.

The carbon nanotubes (2) have the amounts of CO and CO₂ desorption described above and are expected to have a particularly large number of hydroxyl groups and carboxyl groups on the surfaces thereof. As a result of having the property described above, the carbon nanotubes (2) for example have excellent dispersibility in various solvents. Furthermore, the carbon nanotubes (2) have excellent conductivity and are substantially composed of carbon atoms, which means that the carbon nanotubes (2) have excellent reliability and do not suffer from the degradation that is typically observed when a metal is included as a constituent component. Therefore, the carbon nanotubes (2) can be used in various materials.

From a viewpoint of improving usability of the carbon nanotubes (2), the CO desorption of the carbon nanotubes (2) is preferably at least 1,500 µmol/g, more preferably at least 2,000 µmol/g, and particularly preferably at least 3,000 µmol/g, and is preferably no greater than 8,000 µmol/g, more preferably no greater than 6,000 µmol/g, and particularly preferably no greater than 5,000 µmol/g. For the same reason, the CO₂ desorption of the carbon nanotubes (2) is preferably at least 300 µmol/g, more preferably at least 500 µmol/g, and particularly preferably at least 800 µmol/g, and is preferably no greater than 8,000 µmol/g, more preferably no greater than 5,000 µmol/g, and particularly preferably no greater than 2,000 µmol/g.

In the same way as the carbon nanotubes (1), the carbon nanotubes (2) may be single-walled carbon nanotubes or multi-walled carbon nanotubes. Furthermore, the carbon nanotubes (2) preferably satisfy the conditions described above for the carbon nanotubes (1) in terms of average diameter (Av), average length, specific surface area, amount of micropores, and relationship between average diameter (Av) and diameter standard deviation (σ). Preferable ranges for such properties are also the same as described for the carbon nanotubes (1).

The carbon nanotubes (2) can for example be manufactured from unspecified CNTs (also referred to below as "feedstock CNTs") that do not satisfy the above-described amounts of CO and CO₂ desorption through surface treatment of the CNTs with nitric acid. The amounts of CO and CO₂ desorption can be adjusted through appropriate alteration of conditions under which the CNTs are surface treated with nitric acid.

No specific limitations are placed on the nitric acid that is used other than including nitric acid and examples thereof include white fuming nitric acid. The nitric acid that is used normally has a purity of at least 5%, preferably at least 50%, and more preferably at least 80%. Normally at least 200 parts by mass and no greater than 10,000 parts by mass of nitric acid are added relative to 100 parts by mass of the feedstock CNTs. At the time of addition, the resultant mixture may be subjected to ultrasonic treatment to disperse the feedstock CNTs. Thereafter, the resultant mixture may be heated. No specific limitations are placed on the heating method other than being a normally used method that may be selected as appropriate from among methods such as heating in an oil bath or a heating mantle, and heating by microwave irradiation. Heating may be performed at standard pressure or under increased pressure in an autoclave or the like. At standard pressure, heating is normally performed for at least 0.1 hours and no greater than 50 hours at at least 30°C and no greater than 120°C, whereas at increased pressure, heating is normally performed for at least 0.1 hours and no greater than 50 hours at at least 30°C and no greater than 200°C. On the other hand, heating by microwave irradiation is normally performed for at least 0.01 hours and no greater than 24 hours by setting microwave output such that the aforementioned mixture is heated to at least 30°C and no greater than 120°C for heating at standard pressure, and at least 30°C and no greater than 200°C for heating at increased pressure. In any of the cases described above, heating may be performed in one stage or may be performed in two or more stages. The mixture is preferably stirred during heating by any appropriate stirring means.

After the feedstock CNTs have been treated with nitric acid as described above, the resultant mixture is cooled to room temperature because the mixture is extremely hot upon completion of the treatment. Next, nitric acid is for example removed by decantation and the treated CNTs are for example washed with water. Washing is normally performed until washing waste water is neutral.

It is expected that as a result of the CNTs being surface treated with nitric acid, functional groups other than the above-described functional groups, such as nitro groups (-NO₂), will become bonded to the surfaces of the CNTs. The presence of such nitro groups is thought to make a significant contribution toward improving conductivity and dispersibility of the carbon nanotubes (2).

Although no specific limitations are placed on the feedstock CNTs for the carbon nanotubes (2), SGCNTs are highly suitable for use in the same way as described above for the carbon nanotubes (1).

### <Carbon nanotubes (3)>

The carbon nanotubes (3) have a carbon monoxide (CO) desorption of at least 1,000 µmol/g and no greater than 20,000 µmol/g and a carbon dioxide (CO₂) desorption of at least 500 µmol/g and no greater than 10,000 µmol/g at from 150°C to 950°C in temperature programmed desorption.

The carbon nanotubes (3) have the amounts of CO and CO₂ desorption described above and are expected to have a particularly large number of hydroxyl groups and carboxyl groups on the surfaces thereof. As a result of the carbon nanotubes (3) having the property described above, the carbon nanotubes (3) have outstanding dispersibility in various solvents regardless of carbon nanotube structural properties. In particular, the carbon nanotubes (3) are highly suitable due to having excellent dispersibility in solvents even when the carbon nanotubes (3) have an extremely high aspect ratio. Therefore, the carbon nanotubes (3) can be used in various materials.

From a viewpoint of improving usability of the carbon nanotubes (3), the CO desorption of the carbon nanotubes (3) is preferably at least 1,200 µmol/g, more preferably at least 1,500 µmol/g, and particularly preferably at least 2,000 µmol/g, and is preferably no greater than 15,000 µmol/g, more preferably no greater than 10,000 µmol/g, and particularly preferably no greater than 7,000 µmol/g. For the same reason as above, the CO₂ desorption of the carbon nanotubes (3) is preferably at least 600 µmol/g, more preferably at least 800 µmol/g, and particularly preferably at least 1,000 µmol/g, and is preferably no greater than 8,000 µmol/g, more preferably no greater than 5,000 µmol/g, and particularly preferably no greater than 2,000 µmol/g.

The carbon nanotubes (3) normally have a BET specific surface area by nitrogen adsorption of from 500 m²/g to 3,000 m²/g and a BET specific surface area by water vapor adsorption of from 10 m²/g to 500 m²/g.

The BET specific surface area by nitrogen adsorption is equivalent to a specific surface area for which the entire surface of the CNTs is a target and the BET specific surface area by water vapor adsorption is equivalent to a specific surface area for which a hydrophilic surface portion of the CNTs is a target. The carbon nanotubes (3) have a comparatively high BET specific surface area by nitrogen adsorption and also have a hydrophilic surface portion present as a proportion of the entire surface of the CNTs such that the BET specific surface area by nitrogen adsorption and the BET specific surface area by water vapor adsorption are in the ranges described above. Consequently, the carbon nanotubes (3) have outstanding dispersibility in various solvents.

The BET specific surface area by nitrogen adsorption and the BET specific surface area by water vapor adsorption can be obtained through a BET method by respectively measuring a nitrogen adsorption isotherm at 77 K and a water vapor adsorption isotherm at 298 K. Measurement of both BET specific surface areas can for example be performed using a "BELSORP (registered trademark in Japan, other countries, or both)-max" (produced by Bel Japan Inc.).

From a viewpoint of increasing dispersibility of the carbon nanotubes (3), the BET specific surface area of the carbon nanotubes (3) by nitrogen adsorption is preferably at least 800 m²/g, more preferably at least 1,000 m²/g, and particularly preferably at least 1,200 m²/g, and is preferably no greater than 2,500 m²/g, more preferably no greater than 2,300 m²/g, and particularly preferably no greater than 2,000 m²/g. For the same reason as above, the BET specific surface area of the carbon nanotubes (3) by water vapor adsorption is preferably at least 30 m²/g, more preferably at least 50 m²/g, and particularly preferably at least 60 m²/g, and is preferably no greater than 300 m²/g, more preferably no greater than 150 m²/g, and particularly preferably no greater than 130 m²/g. Furthermore, for the same reason as above, a ratio of the BET specific surface area by water vapor adsorption relative to the BET specific surface area by nitrogen adsorption (water vapor adsorption BET specific surface area/nitrogen adsorption BET specific surface area) is preferably at least 0.01 and no greater than 0.2, and more preferably at least 0.03 and no greater than 0.1.

In the same way as the carbon nanotubes (1), the carbon nanotubes (3) may be single-walled carbon nanotubes or multi-walled carbon nanotubes. Furthermore, the carbon nanotubes (3) preferably satisfy the conditions described above for the carbon nanotubes (1) in terms of average diameter (Av), average length, amount of micropores, and relationship between average diameter (Av) and diameter standard deviation (σ). Preferable ranges for such properties are also the same as described for the carbon nanotubes (1).

The carbon nanotubes (3) can for example be manufactured from unspecified CNTs (also referred to below as "feedstock CNTs") that do not satisfy the above-described amounts of CO and CO₂ desorption through surface treatment of the CNTs with ozone. The amounts of CO and CO₂ desorption and the specific surface area of the carbon nanotubes described above can be adjusted through appropriate alteration of conditions under which the CNTs are surface treated with ozone.

Ozone treatment can be performed by placing the feedstock CNTs in a container and then using an ozone generating device to introduce an ozone-containing gas into the container, normally at standard pressure, and causing a reaction to occur for at least 1 minute and no greater than 720 minutes, and preferably at least 30 minutes and no greater than 600 minutes, while adjusting the temperature of the feedstock CNTs to at least 0°C and no greater than 100°C, and preferably at least 20°C and no greater than 50°C.

The ozone that is used may be diluted with air or nitrogen and has a concentration in the ozone-containing gas of preferably at least 0.01 g/Nm³, more preferably at least 1 g/Nm³, and particularly preferably at least 10 g/Nm³, and of preferably no greater than 100 g/Nm³, more preferably no greater than 70 g/Nm³, and particularly preferably no greater than 50 g/Nm³. Although no specific limitations are placed on the humidity of the ozone-containing gas, the humidity has a normal range of at least 20% RH and no greater than 90% RH.

The surfaces of the feedstock CNTs are subjected to the above-described ozone treatment, which differs from surface treatment using a liquid oxidant such as sulfuric acid or nitric acid in terms that the ozone treatment can be performed using a gas. Consequently, the resultant carbon nanotubes (3) after completion of the reaction can be used as a dry solid straight away.

Although no specific limitations are placed on the feedstock CNTs for the carbon nanotubes (3), SGCNTs are highly suitable for use in the same way as described above for the carbon nanotubes (1). Although SGCNTs normally have an extremely high aspect ratio, the SGCNTs can be provided with outstanding dispersibility by converting the SGCNTs to the carbon nanotubes (3) through the ozone treatment described above.

### (Dispersion liquid)

The presently disclosed dispersion liquid includes the presently disclosed CNTs. It is not normally necessary to use a dispersant to manufacture the dispersion liquid because the presently disclosed CNTs have excellent dispersibility in solvents. Therefore, in one embodiment, the dispersion liquid is composed of the presently disclosed CNTs and a solvent.

Examples of solvents that can be used to prepare the dispersion liquid include water, alcohols such as methanol, ethanol, and propanol, ketones such as acetone and methyl ethyl ketone, ethers such as tetrahydrofuran, dioxane, and diglyme, amides such as N,N-dimethylformamide, N,N-dimethylacetamide, N-methyl-2-pyrrolidone, and 1,3-dimethyl-2-imidazolidinone, and sulfur-containing solvents such as dimethyl sulfoxide and sulfolane. Any one of the solvents listed above or a combination of any two or more of the solvents listed above may be used.

The presently disclosed dispersion liquid may also include other components such as a binder, a conductive additive, a dispersant, and a surfactant as desired. Commonly known components may be used as such components as appropriate.

The presently disclosed dispersion liquid can for example be prepared by mixing the presently disclosed CNTs in the solvent and dispersing the CNTs.

Mixing treatment or dispersion treatment can for example be carried out through a method using a nanomizer, an ultimizer, an ultrasonic disperser, a ball mill, a sand grinder, a dyno-mill, a spike mill, a DCP mill, a basket mill, a paint conditioner, or a high-speed stirring device.

Although no specific limitations are placed on the amount of the presently disclosed CNTs included in the presently disclosed dispersion liquid, the amount is preferably at least 0.001% by mass and no greater than 10% by mass.

The presently disclosed dispersion liquid has the CNTs dispersed uniformly therein and is highly suitable for use in the manufacture of a CNT-containing film or a composite material.

### (Carbon nanotube-containing film)

The presently disclosed carbon nanotube-containing film includes the presently disclosed CNTs. No specific limitations are placed on the method for preparing the CNT-containing film and commonly known film formation methods can be used. For example, the CNT-containing film can be formed by method (i) or (ii), described below, using the presently disclosed CNT dispersion liquid.
(i) A method involving applying the CNT dispersion liquid onto a substrate film and removing solvent from the applied CNT dispersion liquid to obtain a CNT-containing film laminated on the substrate film.
(ii) A method involving applying the CNT dispersion liquid onto a peeling support, removing solvent from the CNT dispersion liquid to form a peeling support-mounted, CNT-containing film, and subsequently peeling, if necessary, the peeling support from the peeling support-mounted, CNT-containing film to obtain a CNT-containing film.

### [CNT-containing film formation method (i)]

No specific limitations are placed on the substrate film onto which the CNT dispersion liquid is applied in preparation of the CNT-containing film and known substrate films can be used in accordance with the intended use of the prepared CNT-containing film. In a specific example in which the prepared CNT-containing film is to be used as a transparent conductive film, examples of substrate films that can be used include resin substrates and glass substrates. Examples of resin substrates that can be used include substrates made from polyesters such as polyethylene terephthalate (PET) and polyethylene naphthalate (PEN), polyimide, polyphenylene sulfide, aramids, polypropylene, polyethylene, polylactic acid, polyvinyl chloride, polycarbonate, polymethylmethacrylate, alicyclic acrylic resin, cycloolefin resin, and triacetyl cellulose. Examples of glass substrates that can be used include a substrate made from normal soda glass.

The substrate film may be surface treated in accordance with a commonly known method such as UV irradiation treatment, corona discharge irradiation treatment, ozone treatment, or treatment through application of a silane coupling agent, acrylic resin, or urethane resin. Through surface treatment of the substrate film as described above, close adherence with the CNT-containing film, wettability of the CNT dispersion liquid, and so forth can be controlled. Furthermore, the substrate film may for example include other layers, such as a hard coating layer, a gas barrier layer, and an adhesive layer, on a resin substrate or glass substrate such as described above. The thickness of the substrate film can be selected as appropriate depending on the intended use and is normally from 10 µm to 10,000 µm.

In a situation in which the CNT-containing film is formed on the substrate film and the resultant product is used unmodified as a transparent conductive film, the substrate film preferably has a light transmittance (measurement wavelength: 500 nm) of at least 60%. The light transmittance (measurement wavelength: 500 nm) of the substrate film can for example be measured using a spectrophotometer (V-570 produced by JASCO Corporation).

The CNT dispersion liquid can be applied onto the substrate film by a commonly known application method. Specific examples of application methods that can be used include casting, dipping, roll coating, gravure coating, knife coating, air knife coating, roll knife coating, die coating, screen printing, spray coating, and gravure offset.

Solvent can be removed from the CNT dispersion liquid applied onto the substrate film by a commonly known drying method. Examples of drying methods that can be used include hot-air drying, vacuum drying, hot-roll drying, and infrared irradiation. Although no specific limitations are placed on the drying temperature and time, the drying temperature is normally from room temperature to 200°C and the drying time is normally from 0.1 minutes to 150 minutes. The drying atmosphere may be selected as appropriate and may for example be air, an inert gas such as nitrogen or argon, or a vacuum.

Although no specific limitations are placed on the thickness of the CNT-containing film obtained after solvent removal, the thickness is normally from 100 nm to 1 mm. Also, although no specific limitations are placed on the amount of carbon nanotubes included in the CNT-containing film, the amount is normally from 0.1×10⁻⁶ mg/cm² to 15 mg/cm².

### [CNT-containing film formation method (ii)]

So long as the peeling support onto which the CNT dispersion liquid is applied during CNT-containing film preparation enables sufficient fixing of a film formed thereon and enables the formed film to be peeled therefrom by a thin-film peeling method, no specific limitations are placed peeling support. Examples of peeling supports that can be used include synthetic resin sheets such as PTFE (polytetrafluoro ethylene) sheets and PET (polyethylene terephthalate) sheets, porous sheets of cellulose, nitrocellulose, alumina, and the like, and filter paper.

The thickness of the peeling support may be selected as appropriate and is normally from 10 µm to 10,000 µm.

The CNT-containing film formed on the peeling support can be peeled from the peeling support by a commonly known thin-film peeling method. For example, in a situation in which the peeling support dissolves in a specific solvent, the CNT-containing film can be separated by immersing the peeling support-mounted, CNT-containing film in the solvent to dissolve the peeling support. Furthermore, in a situation in which the peeling support is a porous sheet or filter paper, the CNT-containing film can be obtained by filtering the presently disclosed dispersion liquid through the peeling support, drying the filtration residue, and removing the peeling support. It should be noted that the presently disclosed CNT-containing film may be used as a support-mounted, CNT-containing film with the CNT-containing film attached to a support.

The CNT dispersion liquid can be applied onto the peeling support and solvent can be removed from the CNT dispersion liquid applied onto the peeling support by the same methods as described above for the CNT-containing film formation method (i).

Although the CNT-containing film is normally a single layer, the CNT-containing film may have a layered structure of two or more layers formed through appropriate repetition of CNT dispersion liquid application and solvent removal.

Through the above, the presently disclosed CNT-containing film can be obtained as a laminate film of the CNT-containing film laminated on a substrate film, as a peeling support-mounted, CNT-containing film of the CNT-containing film laminated on a peeling support, or as free-standing film composed of only the CNT-containing film.

As a result of the presently disclosed CNT-containing film being formed using the presently disclosed CNT dispersion liquid, the CNT-containing film can be obtained as a film that does not include a dispersant. Therefore, when the CNT-containing film is to be used as a conductive film, it is not necessary to remove dispersant in order to increase conductivity and the presently disclosed CNT-containing film can be used unmodified as a conductive film having excellent conductivity.

Herein, the term free-standing film refers to a film that can maintain a film-like shape even in the absence of another support for at least a specific thickness and a specific area. The specific thickness is for example at least 10 nm and no greater than 3 µm. Additionally, the specific area is for example at least 1 mm² and no greater than 100 cm².

In a situation in which the presently disclosed CNT-containing film is obtained as a free-standing film, the presently disclosed CNTs that are used preferably have an average diameter (Av) of at least 0.5 nm and no greater than 15 nm. Additionally, the presently disclosed CNTs that are used preferably have an average length of at least 0.1 µm and no greater than 1 cm. As a result of the presently disclosed CNT-containing film being formed using CNTs having shape-related properties such as described above, a free-standing film having a structure in which carbon nanotubes cross over one another to form a network structure can be easily obtained.

The presently disclosed CNT-containing film is highly suitable for use in forming a conductive layer or a catalyst layer of, for example, an electrode material in an electronic device such as a touch panel, a solar cell, or a fuel cell. A conductive layer or a catalyst layer composed of the presently disclosed CNT-containing film can be formed on the surface of a specific substrate or the like using the support-mounted, CNT-containing film by preparing the specific substrate, performing compression bonding of the CNT-containing film to the substrate using a hot press or the like, and subsequently peeling off the support. Alternatively, a conductive layer or a catalyst layer composed of the presently disclosed CNT-containing film may be formed on the surface of a specific substrate or the like by using the specific substrate as a support onto which the presently disclosed dispersion liquid is applied, and drying the resultant applied film.

### (Composite material)

The presently disclosed composite material includes the presently disclosed CNTs and a polymer. The presently disclosed composite material can for example be obtained by combining a polymer with the presently disclosed dispersion liquid in accordance with an objective of the composite material. No specific limitations are placed on the polymer, which can for example be a freely selected rubber or resin.

The amount of the presently disclosed CNTs in the presently disclosed composite material is preferably at least 0.01 parts by mass, more preferably at least 0.1 parts by mass, and particularly preferably at least 0.25 parts by mass relative to 100 parts by mass of the polymer, and is preferably no greater than 10 parts by mass, more preferably no greater than 7 parts by mass, and particularly preferably no greater than 5 parts by mass relative to 100 parts by mass of the polymer. Setting the amount of the CNTs as at least 0.01 parts by mass per 100 parts by mass of the polymer enables sufficient conductivity or mechanical properties to be imparted to the composite material. Furthermore, setting the amount of the CNTs as no greater than 10 parts by mass per 100 parts by mass of the polymer enables uniform dispersion of the CNTs in the composite material while preventing damage to the CNTs.

Combination of the polymer with the presently disclosed dispersion liquid can be appropriately carried out using a latex of a rubber or resin.

No specific limitations are placed on the rubber latex, which may for example be a natural rubber latex or a synthetic diene rubber latex (examples include latexes of butadiene rubber, styrene-butadiene rubber, acrylonitrile-butadiene rubber, ethylene-vinyl acetate rubber, chloroprene rubber, vinylpyridine rubber, and butyl rubber).

No specific limitations are placed on the resin latex, which may for example be a latex of a styrene resin, an acrylic resin, a methacrylic resin, an organic acid vinyl ester resin, a vinyl ether resin, a halogen-containing resin, an olefin resin, an alicyclic olefin resin, a polycarbonate resin, a polyester resin, a polyamide resin, a thermoplastic polyurethane resin, a polysulfone resin, a polyphenylene ether resin, or a silicone resin.

Although no specific limitations are placed on the solid content concentration of the latex, a solid content concentration of at least 20% by mass and no greater than 80% by mass is preferable and a solid content concentration of at least 20% by mass and no greater than 60% by mass is more preferable in terms of uniform dispersibility in the latex.

The presently disclosed composite material may include a commonly known additive. No specific limitations are placed on the additive, which may for example be an antioxidant, a heat stabilizer, a light stabilizer, an ultraviolet absorber, a cross-linking agent, a pigment, a colorant, a foaming agent, an antistatic agent, a flame retardant, a lubricant, a softener, a tackifier, a plasticizer, a mold release agent, a deodorant, or a perfume.

The presently disclosed composite material can for example be obtained by mixing the presently disclosed dispersion liquid, the latex, and optional additives by a commonly known method. The mixing time is normally at least 10 minutes and no greater than 24 hours.

After the latex is combined with the presently disclosed dispersion liquid, the resultant composite material may be caused to coagulate in accordance with a commonly known method. Coagulation of the composite material can be carried out in accordance with a commonly known latex coagulation method. Examples of coagulation methods that can be used include a method in which the composite material is added to a water-soluble organic solvent, a method in which an acid is added to the composite material, and a method in which a salt is added to the composite material.

The coagulated composite material may be used as a composite material shaped product after optionally carrying out drying. The shaped product may for example be obtained by shaping the composite material described above using a forming machine suited to the shape of a desired shaped item. Examples of the forming machine include an extruder, an injection molder, a compressor, and a roller. The composite material shaped product may optionally be subjected to cross-linking treatment.

As a result of the presently disclosed composite material having the presently disclosed CNTs uniformly dispersed therein, the composite material shaped product obtained as described above has, for example, excellent conductivity and mechanical properties. Although no specific limitations are placed on how the presently disclosed composite material is used, the composite material is for example highly suitable as a material of a hose, a tire, or an electromagnetic shield.

### EXAMPLES

The following provides more specific explanation of the present disclosure through examples. However, the present disclosure is not limited by the following examples.

Properties were evaluated in Examples 1 to 5 through the methods described below.

### (Evaluation by temperature programmed desorption)

A free-standing film was set in a fully-automated thermal desorption spectrometer "TPD-1-ATw" produced by Bel Japan Inc. and a carrier gas (He) was caused to flow at 50 mL/minute. Amounts of CO and CO₂ desorption were obtained by raising the temperature from 150°C to 950°C at a heating rate of 5°C/minute to heat the free-standing film, detecting CO and CO₂ produced during heating using a quadrupole mass spectrometer, and using the obtained amounts of CO and CO₂ gases to calculate the amounts (µmol) of the gases produced per 1 g of CNTs.

### (BET specific surface area)

After pretreatment of a free-standing film in a vacuum to remove adsorbed water, adsorption isotherms were measured for nitrogen (temperature: 77 K) and distilled water (temperature: 298 K) using a "BELSORP (registered trademark in Japan, other countries, or both)-max" produced by Bel Japan Inc., and a BET specific surface area by nitrogen adsorption and a BET specific surface area by water vapor adsorption were obtained through a BET method.

### (Dispersibility)

After 0.001 g of CNTs were added to 5 mL of ethanol or 5 mL of water, dispersion was performed for 60 minutes using an ultrasonic disperser and dispersibility was visually evaluated in accordance with the following standard.

### [Evaluation standard]

Good: Aggregates visible by naked eye not present
Poor: Aggregates visible by naked eye present

### (Volume resistivity)

A free-standing film was measured by a conductivity meter (produced by Mitsubishi Chemical Analytech Co., Ltd., product name "Loresta (registered trademark in Japan, other countries, or both) GP") through a four terminal method.

### (SGCNT preparation)

SGCNTs were prepared by a super growth method in accordance with the contents of WO2006/011655.

The obtained SGCNTs were mainly composed of single-walled CNTs and had a BET specific surface area of 800 m²/g and a micropore volume of 0.44 mL/g. Additionally, the average diameter (Av) was 3.3 nm, the diameter distribution (3σ) was 1.9 nm, 3σ/Av was 0.58, and the average length was 500 µm.

### (Example 1)

A thermometer, a water-flow reflux condenser, and a stirrer were attached to a three-necked flask having a capacity of 500 mL. The flask was loaded with 1 g of the SGCNTs described above and 80 mL of sulfuric acid (produced by Tokyo Chemical Industry Co., Ltd., 96% purity). The three-necked flask was immersed in an oil bath at 155°C and once the internal temperature of the flask reached 130°C, the flask was stirred under heating for 6 hours to perform sulfuric acid treatment of the SGCNTs.

Once the treatment was complete, cooling was performed to room temperature and an operation of adding deionized water and decanting a supernatant was repeated until washing waste water was neutral (pH 6.8). Through the above, sulfuric acid treated SGCNTs 1 having a mass of 29.6 g in a wet state were obtained.

Also, 0.01 g (in terms of solid content) of the obtained sulfuric acid treated SGCNTs 1 were added to 10 mL of deionized water and were dispersed for 60 minutes by an ultrasonic disperser to obtain a dispersion liquid. Thereafter, a free-standing film was obtained by filtering the dispersion liquid under reduced pressure, drying the filtration residue with the filter paper for 1 hour at 100°C, and peeling the filter paper from the dried filtration residue.

Various properties were evaluated using the sulfuric acid treated SGCNTs 1 and the free-standing film thereof described above. Table 1 shows the results that were obtained.

### (Example 2)

A pear-shaped flask having a capacity of 200 mL, a magnetic stirrer, a thermometer, and a water-flow reflux condenser were set up in a microwave treatment device (produced by Shikoku Instrumentation Co., Ltd., product name µReactor Ex). The pear-shaped flask was loaded with 1 g of the SGCNTs described above and 80 mL of sulfuric acid (produced by Tokyo Chemical Industry Co., Ltd., 96% purity).

Microwave output was set such that the internal temperature became 130°C while stirring was performed by the magnetic stirrer. Once the internal temperature reached 130°C, microwave heating was performed for 30 minutes to subject the SGCNTs to sulfuric acid treatment. Once the treatment was complete, a washing operation was performed in the same way as in Example 1 to yield sulfuric acid treated SGCNTs 2 having a mass of 8.8 g in a wet state. A free-standing film of the sulfuric acid treated SGCNTs 2 was also prepared in the same way as in Example 1.

Various properties were evaluated using the sulfuric acid treated SGCNTs 2 and the free-standing film thereof described above. Table 1 shows the results that were obtained.

**[Table 1]**

| | Example 1 | Example 2 |
|---|---|---|
| CNTs | Sulfuric acid treated SGCNTs 1 | Sulfuric acid treated SGCNTs 2 |
| CO desorption (µmol/g) | 580 | 400 |
| CO₂ desorption (µmol/g) | 243 | 325 |
| Dispersibility (ethanol) | Good | Good |
| Volume resistivity (Ω·cm) | 0.019 | 0.012 |

### (Example 3)

A thermometer, a water-flow reflux condenser, and a stirrer were attached to a three-necked flask having a capacity of 500 mL. The flask was loaded with 1 g of the SGCNTs described above and 80 mL of nitric acid (produced by Tokyo Chemical Industry Co., Ltd., 69% purity). The three-necked flask was immersed in a 130°C-oil bath and once a reflux state was reached at an internal temperature of 130°C, the flask was stirred under heating for 6 hours to perform nitric acid treatment of the SGCNTs.

Once the treatment was complete, cooling was performed to room temperature and an operation of adding deionized water and decanting a supernatant was repeated until washing waste water was neutral (pH 6.8). Through the above, nitric acid treated SGCNTs 1 having a mass of 21.3 g in a wet state were obtained.

Also, 0.01 g (in terms of solid content) of the obtained nitric acid treated SGCNTs 1 were added to 10 mL of deionized water and were dispersed for 60 minutes by an ultrasonic disperser to obtain a dispersion liquid. Subsequently, a free-standing film was obtained by filtering the dispersion liquid under reduced pressure, drying the filtration residue with the filter paper for 1 hour at 100°C, and peeling the filter paper from the dried filtration residue.

Various properties were evaluated using the nitric acid treated SGCNTs 1 and the free-standing film thereof described above. Table 2 shows the results that were obtained.

### (Example 4)

A pear-shaped flask having a capacity of 200 mL, a magnetic stirrer, a thermometer, and a water-flow reflux condenser were set up in a microwave treatment device (produced by Shikoku Instrumentation Co., Ltd., product name µReactor Ex). The pear-shaped flask was loaded with 1 g of the SGCNTs described above and 80 mL of nitric acid (produced by Tokyo Chemical Industry Co., Ltd., 69% purity).

Microwave output was set such that the internal temperature became 130°C while stirring was performed by the magnetic stirrer. Once the internal temperature reached 130°C, microwave heating was performed for 30 minutes to subject the SGCNTs to nitric acid treatment. Once the treatment was complete, a washing operation was performed in the same way as in Example 3 to yield nitric acid treated SGCNTs 2 having a mass of 3.9 g in a wet state. A free-standing film of the nitric acid treated SGCNTs 2 was also prepared in the same way as in Example 3.

Various properties were evaluated using the nitric acid treated SGCNTs 2 and the free-standing film thereof described above. Table 2 shows that results that were obtained.

**[Table 2]**

| | Example 3 | Example 4 |
|---|---|---|
| CNTs | Nitric acid treated SGCNTs 1 | Nitric acid treated SGCNTs 2 |
| CO desorption (µmol/g) | 3244 | 3132 |
| CO₂ desorption (µmol/g) | 1036 | 1027 |
| Dispersibility (ethanol) | Good | Good |
| Dispersibility (water) | Good | Good |
| Volume resistivity (Ω·cm) | 0.0418 | 0.0418 |

### (Example 5)

A pear-shaped flask having a capacity of 500 mL was loaded with 1 g of the SGCNTs described above and was connected to an evaporator. A mixed gas of air and ozone (20 g/Nm³ ozone concentration) from an ozone generating device was caused to flow at standard pressure in a gas passage of the evaporator at a flow rate of 600 mL/minute. The pear-shaped flask was rotated by the evaporator for 6 hours at room temperature while performing ozone treatment to yield ozone treated SGCNTs 1. There was no visibly observable change from the initial SGCNTs in the obtained ozone treated SGCNTs 1.

Also, 0.01 g of the obtained ozone treated SGCNTs 1 were added to 10 mL of deionized water and were dispersed for 60 minutes by an ultrasonic disperser to obtain a dispersion liquid. Subsequently, a free-standing film was obtained by filtering the dispersion liquid under reduced pressure, drying the filtration residue with the filter paper for 1 hour at 100°C, and peeling the filter paper from the dried filtration residue.

Various properties were evaluated using the ozone treated SGCNTs 1 and the free-standing film thereof described above. Table 3 shows the results that were obtained.

**[Table 3]**

| | Example 5 |
|---|---|
| CNTs | Ozone treated SGCNTs 1 |
| CO desorption (µmol/g) | 5511 |
| CO₂ desorption (µmol/g) | 1440 |
| Nitrogen adsorption BET specific surface area (m²/g) | 1307 |
| Water vapor adsorption BET specific surface area (m²/g) | 93 |
| Specific surface area ratio (water vapor/nitrogen) | 0.071 |
| Dispersibility (ethanol) | Good |

Tables 1 to 3 demonstrate that the SGCNTs obtained in the above examples through oxidation treatment by sulfuric acid treatment, nitric acid treatment, or ozone treatment were uniformly dispersed without using a dispersant and had excellent dispersibility (refer to Examples 1 to 5), and also demonstrate that the free-standing films had low volume resistivity and excellent conductivity (refer to Examples 1 to 4).

Properties were evaluated in Examples 6 to 8 through the method described below.

### (Conductivity evaluation)

After shaping an applied film into a circular thin-film shape having a diameter of approximately 40 mm to 60 mm and a thickness of 100 µm to 500 µm, four square test pieces of 10 mm×10 mm were cut out and used as measurement samples.

Conductivity was then measured and evaluated in accordance with JIS K7194 by a method described below using a low resistivity meter (produced by Mitsubishi Chemical Analytech Co., Ltd, product name "Loresta (registered trademark in Japan, other countries, or both)-GP MCP-T610"). A PSP probe was selected as a four-pin probe of the low resistivity meter. Specifically, a measurement sample was mounted on an insulating board, the probe was pressed against a central position of the measurement sample (position 5 mm vertically and 5 mm laterally), and conductivity was measured by applying voltage having a maximum value of 90 V. Conductivity was measured at 50 random locations on the four measurement samples, an average value was calculated, and conductivity was evaluated in accordance with the following standard.

### [Evaluation standard]

- A:: Less than 100 Ω/square
- B:: At least 100 Ω/square and less than 1,000 Ω/square
- C:: At least 1,000 Ω/square

### (Example 6)

A mixed solution of the sulfuric acid treated SGCNTs 1 and a rubber was obtained by mixing 5.063 g of the dispersion liquid of the sulfuric acid treated SGCNTs 1 obtained in Example 1 and 0.5 g of an acrylonitrile-butadiene latex (produced by Nippon A&L Inc., product name "CYATEX (registered trademark in Japan, other countries, or both) NA-20", undissolved component of acrylonitrile-butadiene rubber in THF: 70% by mass) such that 2% by mass of CNTs were included relative to the polymer, and stirring for 1 hour. The mixed solution was poured into a glass dish and water was evaporated to yield an applied film (composite material) by leaving the mixed solution at 50°C for 48 hours in a dry air flow environment. The applied film was used to evaluate conductivity by the method described above. Table 4 shows the results.

### (Example 7)

An applied film (composite material) was formed and conductivity was evaluated in the same way as in Example 6 in all aspects other than that the dispersion liquid of the nitric acid treated SGCNTs 1 obtained in Example 3 was used instead of the dispersion liquid of the sulfuric acid treated SGCNTs 1. Table 4 shows the results.

### (Example 8)

An applied film (composite material) was formed and conductivity was evaluated in the same way as in Example 6 in all aspects other than that the dispersion liquid of the ozone treated SGCNTs 1 obtained in Example 5 was used instead of the dispersion liquid of the sulfuric acid treated SGCNTs 1. Table 4 shows the results.

**[Table 4]**

| | Example 6 | Example 7 | Example 8 |
|---|---|---|---|
| CNTs | Sulfuric acid treated SGCNTs 1 | Nitric acid treated SGCNTs 1 | Ozone treated SGCNTs 1 |
| CO desorption (µmol/g) | 580 | 3244 | 5511 |
| CO₂ desorption (µmol/g) | 243 | 1036 | 1440 |
| Conductivity | A | B | B |

Table 4 demonstrates that a composite material having excellent conductivity, indicated by a low resistance value, can be obtained using SGCNTs subjected to oxidation treatment by sulfuric acid treatment, nitric acid treatment, or ozone treatment (refer to Examples 6 to 8).

Properties were evaluated in Examples 9 and 10 through the methods described below.

### (Catalyst layer close adherence)

Close adherence of a catalyst layer was evaluated in accordance with the following standard using a prepared counter electrode.

### [Evaluation standard]

Good: No change in state of film occurs upon washing with toluene
Poor: Peeling of film occurs upon washing with toluene

### (Cell performance)

A solar simulator (PEC-L11 produced by Peccell Technologies Inc.) in which an AM1.5G filter was attached to a 150 W xenon lamp light source was used as a light source. The light intensity was adjusted to 1 sun (AM1.5G, 100 mW/cm² [Class A of JIS C8912]). A prepared dye-sensitized solar cell was connected to a sourcemeter (Series 2400 SourceMeter produced by Keithley Instruments) and the following current/voltage characteristic was measured.

Output current was measured while changing bias voltage from 0 V to 0.8 V in 0.01 V units under 1 sun light-irradiation. The output current was measured for each voltage step by, after the voltage had been changed, integrating values from 0.05 seconds after the voltage change to 0.15 seconds after the voltage change. Measurement was also performed while changing the bias voltage in the reverse direction from 0.8 V to 0 V, and an average value for the forward direction and the reverse direction was taken to be a photoelectric current.

Measurement results of the current/voltage characteristic described above were used to calculate the open-circuit voltage (V), the fill factor, and the energy conversion efficiency (%). The short-circuit current density (mA/cm²) was also measured.

### (Example 9)

### <Counter electrode manufacture>

A 30 mL glass container was loaded with 5 g of water, 1 g of ethanol, and 0.0025 g of the sulfuric acid treated SGCNTs 1 obtained in Example 1.

The contents of the glass container were subjected to dispersion treatment for 2 hours using a bath-type ultrasonic cleaner (produced by Branson Ultrasonics Corporation, 5510J-MT, 42 kHz, 180 W) to yield an aqueous dispersion.

Next, the aqueous dispersion was applied onto an indium tin oxide (ITO) surface of a polyethylene naphthalate film subjected to ITO sputtering treatment (ITO-PEN film, 200 µm film thickness, 200 nm ITO thickness, 15 Ω/square sheet resistance) using a bar coater (produced by Tester Sangyo Co., Ltd., SA-203, No. 10) such as to have an application thickness of 22.9 µm. The obtained applied film was dried for 2 hours at 23°C and 60% relative humidity to form a catalyst layer and obtain a counter electrode.

Close adherence of the catalyst layer was evaluated. Table 5 shows the results.

### <Photoelectrode manufacture>

A binder-free titanium oxide paste (PECC-C01-06 produced by Peccell Technologies, Inc.) was applied onto an indium tin oxide (ITO) surface of a polyethylene naphthalate film subjected to ITO sputtering treatment (ITO-PEN film, 200 µm film thickness, 200 nm ITO thickness, 15 Ω/square sheet resistance) using a Baker-type applicator such as to have an application thickness of 150 µm. The obtained applied film was dried for 10 minutes at standard temperature and was subsequently dried for 5 minutes under heating in a 150°C-thermostatic bath to obtain a laminate of the ITO-PEN film and a porous semiconductor fine particulate layer.

The laminate was cut to 2.0 cm in length and 1.2 cm in width, and the porous semiconductor fine particulate layer was shaped into a circle having a diameter of 6 mm, 2 mm inward from a short side of the laminate. The resultant laminate was immersed into a sensitizing dye solution (sensitizing dye: ruthenium complex [N719 produced by Solaronix], solvent: acetonitrile, tert-butanol, concentration: 0.4 mM) for 2 hours at 40°C to cause adsorption of the sensitizing dye onto the porous semiconductor fine particulate layer. After the immersion treatment, the laminate was washed with acetonitrile and dried to obtain a photoelectrode.

### <Electrolysis solution preparation>

Iodine, lithium iodide, t-butylpyridine, and 1,2-dimethyl-3-propylimidazolium iodide were dissolved in methoxyacetonitrile to prepare an electrolysis solution containing 0.05 mol/L of iodine, 0.1 mol/L of lithium iodide, 0.5 mol/L of t-butylpyridine, and 0.6 mol/L of 1,2-dimethyl-3-propylimidazolium iodide.

### <Dye-sensitized solar cell manufacture>

A spacer film was prepared by cutting out a 14 mm square from Surlyn film (25 µm thickness, produced by DuPont) and removing a central section of 9 mm in diameter. The counter electrode and the photoelectrode were placed in opposition to one another with the spacer film in-between and with conductive surfaces thereof facing inward, and were subjected to thermal compression bonding for 1 minute on a hot press heated to 110°C.

After allowing cooling to occur, a hole was opened in the counter electrode and the electrolysis solution was poured in through the hole. After pouring of the electrolysis solution, the hole through which the electrolysis solution was poured was blocked with Surlyn film (25 µm thickness, produced by DuPont) to obtain a dye-sensitized solar cell.

Cell performance of the dye-sensitized solar cell was evaluated. Table 5 shows the results.

### (Example 10)

A counter electrode was prepared in the same way as in Example 9 in all aspects other than that a PEN film was used instead of the ITO/PEN film. A dye-sensitized solar cell obtained using the prepared counter electrode was evaluated. Table 5 shows the results.

**[Table 5]**

| | | Example 9 | Example 10 |
|---|---|---|---|
| CNTs | | Sulfuric acid treated SGCNTs 1 | Sulfuric acid treated SGCNTs 1 |
| CO desorption (µmol/g) | | 580 | 580 |
| CO₂ desorption (µmol/g) | | 243 | 243 |
| Close adherence | | A | A |
| Electricity generation test | Short-circuit current density (mA/cm²) | 9.1 | 8.0 |
| | Open-circuit voltage (V) | 0.7 | 0.7 |
| | Fill factor | 0.6 | 0.6 |
| | Energy conversion efficiency (%) | 4.3 | 4.0 |

Table 5 demonstrates that a counter electrode including a catalyst layer having excellent properties and a dye-sensitized solar cell having excellent cell properties can be obtained using SGCNTs subjected to oxidation treatment through sulfuric acid treatment (refer to Examples 9 and 10).

### INDUSTRIAL APPLICABILITY

The presently disclosed CNTs are for example highly suitable for use as, for example, a constituent material of a conductive layer or a catalyst layer of an electrode in an electronic component or an electronic device such as a touch panel, a solar cell, or a fuel cell.

## Claims

1. Carbon nanotubes having a carbon monoxide desorption of from 10 µmol/g to 20,000 µmol/g and a carbon dioxide desorption of from 100 µmol/g to 10,000 µmol/g at from 150°C to 950°C in temperature programmed desorption.

2. The carbon nanotubes of claim 1, wherein
the carbon monoxide desorption is from 10 µmol/g to 600 µmol/g and the carbon dioxide desorption is from 150 µmol/g to 350 µmol/g at from 150°C to 950°C in temperature programmed desorption.

3. The carbon nanotubes of claim 1, wherein
the carbon monoxide desorption is from 1,000 µmol/g to 10,000 µmol/g and the carbon dioxide desorption is from 100 µmol/g to 10,000 µmol/g at from 150°C to 950°C in temperature programmed desorption.

4. The carbon nanotubes of claim 1, wherein
the carbon monoxide desorption is from 1,000 µmol/g to 20,000 µmol/g and the carbon dioxide desorption is from 500 µmol/g to 10,000 µmol/g at from 150°C to 950°C in temperature programmed desorption.

5. The carbon nanotubes of claim 4, wherein
the carbon nanotubes have a BET specific surface area by nitrogen adsorption of from 500 m²/g to 3,000 m²/g and a BET specific surface area by water vapor adsorption of from 10 m²/g to 500 m²/g.

6. The carbon nanotubes of any one of claims 1 to 5, wherein
the carbon nanotubes are single-walled carbon nanotubes.

7. A dispersion liquid comprising
the carbon nanotubes of any one of claims 1 to 6.

8. A carbon nanotube-containing film comprising
the carbon nanotubes of any one of claims 1 to 6.

9. A composite material comprising
the carbon nanotubes of any one of claims 1 to 6 and a polymer.
